# EUROPEAN PATENT APPLICATION

(11) **EP 4 624 296 A1**
(43) Date of publication of application: **01.10.2025**
(21) Application number: 24305474.9
(22) Date of filing: 28.03.2024
(51) Int. Cl.: B61F 19/06, B60R 19/20, B60R 21/201, B64D 45/06

(54) **IMPROVED AIRBAG, IN PARTICULAR FOR A VEHICLE**

(71) Applicant: ALSTOM Holdings, 93400 Saint-Ouen-sur-Seine (FR)
(72) Inventor: FEL, Landri, A1210 WIEN (AT); CAUZA, Chiril, 21000 DIJON (FR)
(74) Representative: Lavoix

(57) **Abstract**

The airbag device (10) comprises an external flexible envelope (16) delimiting an internal space, and a central airbag (12) arranged inside the internal space, and it comprises at least one flat flexible insert (18) arranged between the central airbag (12) and the external flexible envelope (16).

## Description

The present invention relates to an airbag device, in particular intended to equip a vehicle, and particularly a railway vehicle, such as an urban railway vehicle, for example a tramway.

Such an airbag device is intended to be arranged externally of a vehicle, in order to deploy nearly instantly for absorbing energy during a collision. More specifically, the airbag device is intended to reduce the severity of a collision between the vehicle and any object or a person or and any type of vehicle.

The invention might be also applicable to any ground vehicles (like cars, buses, trucks, etc.). A specific interest could be for driverless road vehicles (like small public shuttles or urban taxi). Preventing any death or limiting injuries to surrounding persons could be instrumental in fostering a large public acceptance for these new transport means.

Application for air/space vehicle could be considered too (like an emergency landing protection for small aircraft or drones or planet exploration landing vehicle).

An airbag device is already known from prior art, for example from US 6 832 776. Such an airbag device comprises an external flexible envelope delimiting an internal space, and a central airbag arranged inside the internal space.

The invention is intended to improve such an airbag device, by proposing an airbag device where the airbag is stored, before inflation, in a very flat volume, while being able to spread into an optimized shape while inflated. The airbag of the invention should be able to deploy very quickly by using a minimum quantity of compressed gas and, after deployment, it should be able to offer at the same time an important volume that is significantly cylindrical, a significant rigidity and high stability of its shape and a high absorption of the collision energy during a shock.

To this end, the invention relates to an airbag device, in particular for a vehicle, comprising an external flexible envelope delimiting an internal space, and a central airbag arranged inside the internal space, characterized in that it comprises at least one flat flexible insert arranged between the central airbag and the external flexible envelope.

The flexible insert is embedded by the external envelope before inflation. During inflation, the flexible insert spreads into a deployed shaped, guiding the external envelope to this shape. It is thus possible to get an optimized inflated shape that gets rigid thanks to the curved shape of the deformed insert.

An airbag device according to the invention may comprise any of the following features, taken alone or in any possible combination.
- The airbag device comprises a flexible internal envelope embedding the airbag.
- The airbag device comprises at least one pair of inserts, each pair comprising a first upper insert arranged above the airbag in a vertical direction and a second lower insert arranged under the airbag in the vertical direction.
- The airbag device comprises at least two pair of inserts, each pair of insert being inclinable, or foldable, or extendable in a telescopic way relative to each other.
- The airbag device comprises at least three pairs of inserts, comprising a central pair and at least two lateral pairs, each lateral pair being movable relative to the central pair.
- The lateral pairs are movable in a plane perpendicular to a vertical direction, between a rest position in which the lateral pairs are inclined with respect to the central pair, and an inflated position in which the lateral pairs are aligned with the central pair in a longitudinal direction.
- The lateral pairs are folded over the central pair in a rest configuration, around a fold parallel to a transverse direction, the lateral pairs being configured to unfold when the airbag is inflated, so as to align with the central pair in a longitudinal direction perpendicular to the transverse direction.
- The lateral pairs overlap the central pair in a longitudinal direction in the rest configuration, and are spread in the longitudinal direction in a telescopic way, by sliding and translating relative to the central pair, when the airbag is inflated.
- Each insert is made of a rigid thin plate that can deform from a substantially flat panel shape before inflation to a significantly curved panel shape after inflation.

Several aspects and advantages of the invention will be enlightened in the following disclosure, given only as a non-limitative example and made in reference to attached figures, in which:
- Figure 1 shows a transverse sectional view an airbag device according to a first example of embodiment, in a rest configuration, before inflation;
- Figure 2 is a similar view as Figure 1, showing the airbag device during inflation;
- Figure 3 is a similar view as Figure 1 and 2, showing the airbag device while inflated;
- Figure 4 is a top view of a vehicle equipped with the airbag device, before inflation of the airbag device;
- Figure 5 is a similar view as Figure 4 of the vehicle after inflation of the airbag device
- Figure 6 is a top view of an airbag device according to a second embodiment, in three respective configuration, which are before inflation, during inflation, and inflated;
- Figure 7 is a top view of an airbag device according to a third embodiment, in three respective configuration, which are before inflation, during inflation, and inflated;
- Figure 8 is a top view of an airbag device according to a fourth embodiment, in three respective configuration, which are before inflation, during inflation, and inflated.

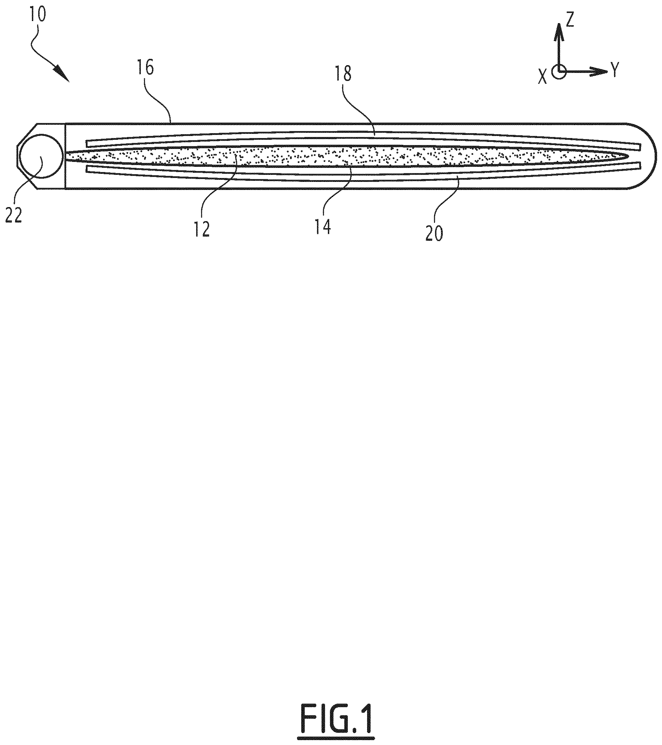

An airbag device 10 according to a first example of embodiment is shown on figures 1 to 3.

The airbag device 10 comprises an airbag 12, formed by a hermetical closed and airtight bag that can be quickly inflated with compressed gas. The airbag 12 is made of a thin, deformable, and significantly elastic membrane. Preferentially, the airbag 12 is made of a Polyurethane foil, Polyurethane printed technical fabric, or any other material having similar characteristics.

Preferentially, the airbag device 10 comprises a flexible internal envelope 14 embedding the airbag 12. This flexible internal envelope 14 is intended to protect the airbag 12, and to withstand the tension loads when the airbag 12 is inflated. The internal envelope 14 is made of an easily deformable and tension resistant material. Preferentially, the internal envelope 14 is made of a polyester fabric or any other material having similar characteristics.

The airbag device 10 comprises a flexible external envelope 16, delimiting an internal space where the airbag 12 and the internal envelope 14 are arranged.

The airbag device 10 according to the invention comprises at least one insert arranged in the internal space, between the internal envelope 14 and the external envelope 16. Preferentially, the airbag device 10 comprises a first upper insert 18 and a second lower insert 20. The wording "upper" and "lower" are considered in a vertical direction Z in which the airbag device 10 is intended to be oriented. The upper insert 18 is arranged above the airbag 12 and the lower insert 20 is arranged under the airbag 12, in the vertical direction Z.

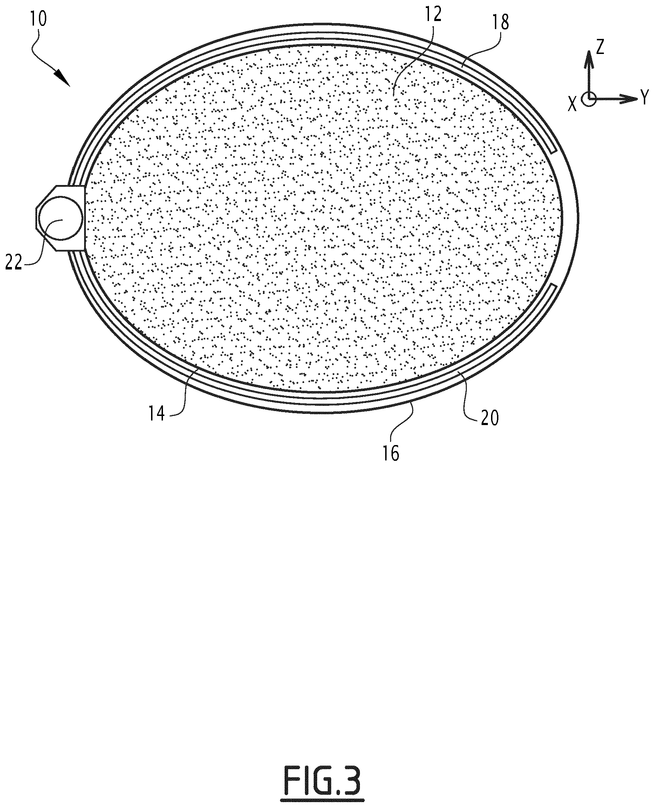

Each insert 18, 20 is made of a rigid thin plate that can deform from a significantly flat panel shape before inflation (as shown on figure 1) to a significantly curved panel shape after inflation (as shown on figure 3).

The inserts 18, 20 are preferentially made of a very thin sheet of steel or any other metallic material, plastic material or fibre and resin composite material having similar characteristics.

The external envelope 16 is easily deformable, and is intended to protect the components inside the internal space. The external envelope 16 maintains the inserts 18, 20 in a precise position regarding the internal envelop 14 before, during and after the inflation. The external envelop 16 is preferentially made of an easily deformable material resistant material that provides a good resistance to tension loads, abrasion and long exposure to external harsh environment including salty or dirty water, snow, projection of small stones.

The external envelope 16 preferentially holds a multiplicity of fixation elements (fasteners like belts, lugs, etc.) enabling to rigidly fix the airbag device 10 onto another structural element, in particular on the front of a vehicle, or under the vehicle.

The external envelope 16, inserts 18, 20, internal envelope 14 and airbag 12 have a significantly rectangular shape with quite similar contours and dimensions making them fitting tightly one inside the other (like the successive layers of an onion) from the most central one (the airbag 12) up to the most peripheral one (the external envelope 16).

On figures 1 to 3, the airbag device 10 is shown in a transverse cross section, in a transverse plane comprising the vertical direction Z and a transverse direction Y perpendicular to the vertical direction. The airbag device 10 extends in a longitudinal direction X that is perpendicular to the vertical direction Z and to the transverse direction Y.

In the rest configuration shown on Figure 1, the airbag device 10 is flat, i.e. it occupies a minimal space in the vertical direction Z.

The airbag device 10 also comprises an inflation device 22. The inflation device 22 is able to blow within a very short time a large quantity of compressed gas into the airbag 12, for example via a pipe that goes through or aside the various components of the airbag device 10. Such an inflation device is well known, so it will not be disclose in more details.

The inflation device 22 stores or generates a large quantity of compressed gas. Depending on the foreseen application. The gas can be air, CO2, N2, helium, mixtures of gases (like Argon and Helium) or any suitable gas or gas mixtures. Depending on the foreseen application, the inflation system 22 may comprise either compressed gas tanks or chemical gas generators or gas compressors or any other adequate means.

The inflation device 22 is able to quickly deliver a specific quantity of compressed gas to fill the airbag 12 and fully inflate the airbag device 10. Depending on the foreseen application, the inflation time of the airbag 12 may range from few milliseconds up to few minutes.

Preferentially, the inflation device 22 is configured to build-up and to maintain the inflating gas inside the airbag 12 at a certain overpressure compared to the ambient air pressure. Depending on the foreseen application, this overpressure may range from few millibars up to few bars.

As shown on Figure 1, before the Airbag device 10 is inflated, its main components are occupying a compact and very flat volume. All these components are laid one inside the other in a kind of sandwich construction of several layers with no ply.

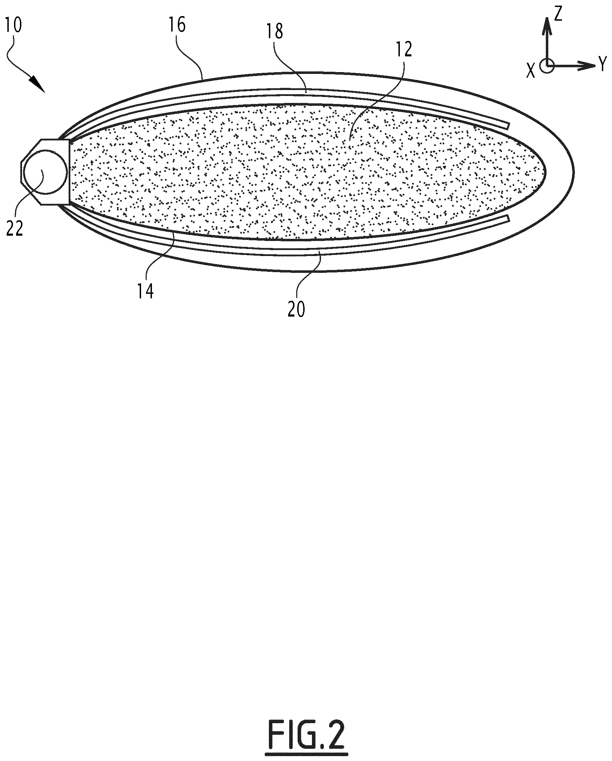

During the inflation, as shown on Figure 2, the compressed gas delivered by the inflation device 22 fills the airbag 12 that deforms from a small volume having a significantly rectangular shape and a very small thickness to a much bigger volume having a significantly cylindrical shape.

The internal envelope 14 sustains the tension loads induced by the inflation of the airbag 12 and deforms into the same significantly cylindrical shape.

Each of the two thin rigid inserts 18, 20, tightly maintained between the internal envelope 14 and the external envelope 16, deforms from a flat panel shape having a substantially linear cross-section into a curved panel having a significantly semi-circular cross-section. Relative to a center line of the device 10, each deformed insert 18, 20 builds a half cylindrical tube with inverted curvatures, with the airbag 12 in each concavity.

The two curved inserts 18, 20, clamped between the internal envelope 14 and the external envelope 16, are like two half tube parts building a kind of split rigid tube, just cut along a plane passing through its diameter into two symmetrical parts. Together, the two deformed inserts 18, 20 provide a space having a significantly cylindrical shape.

The external envelope 16 sustains the tension loads induced by the deformation of the two curved inserts 18, 20, and thanks to this external envelope 16, the complete device 10 builds a significantly cylindrical volume.

Figure 3 shows the airbag device 10 when fully inflated.

The two inserts 18, 20 forming two semi-rigid half-tubes are held stably in position in the peripheral portion of the significantly cylindrical volume by the gas overpressure and the two concentric internal 14 and external 16 envelopes. The inserts 18, 20 cover most of the peripheral surface of the device 10, but do not cover its totality. Some parts of the outer surface of the device 10 which are not covered by the rigid components (like narrow bands around the outer contours of the two half-tube shape plates) are only made of the superposition of the soft components (the airbag 12 filled with gas and the two concentric fabric envelopes 14, 16.

This auto-stabilizing combination of soft and rigid components provides at the same time a very high stability to the device 10 overall shape and volume, mostly given by the rigid components, and a certain amount of elasticity in case of shock, thanks to the capability of the soft components to move and deform slightly.

The fully inflated device 10 is able it to withstand heavy loads in all directions, in particular bending loads normal to the cylinder center line, torsion loads along the cylinder center line, and compression loads normal to any external surface.

It should be notice that the dimensions, shapes thicknesses, materials and/or positions of the several components of the device 10 can vary in alternative embodiments, in particular in view to precisely define the shape, the rigidity and the capacity for absorbing collision energy of the inflated device 10. For example, depending on the ratio between the rigidity of the inserts 18 20 and the gas pressure within the airbag 12, the contour of the cross-section perpendicular to the long axis of the fully inflated device may vary from a very elongated ellipse up to a circle. For example, a configuration with smaller rigid inserts 18, 20 not covering large parts of the envelope surface would reduce the rigidity but would increase the collision energy absorption of the device 10.

In another example, the inserts 18, 20 may be elastically deformable in order to have the inflation of the device 10 reversible. This allows the device 10 being able to come back to its original shape and volume when the gas overpressure in the airbag 12 is suppressed.

Alternatively, the inserts 18, 20 may be plastically deformable to have the inflation of the device 10 irreversible, so the device 10 significantly keeps its shape post inflation even when the gas overpressure in the airbag 12 is diminishing or even suppressed.

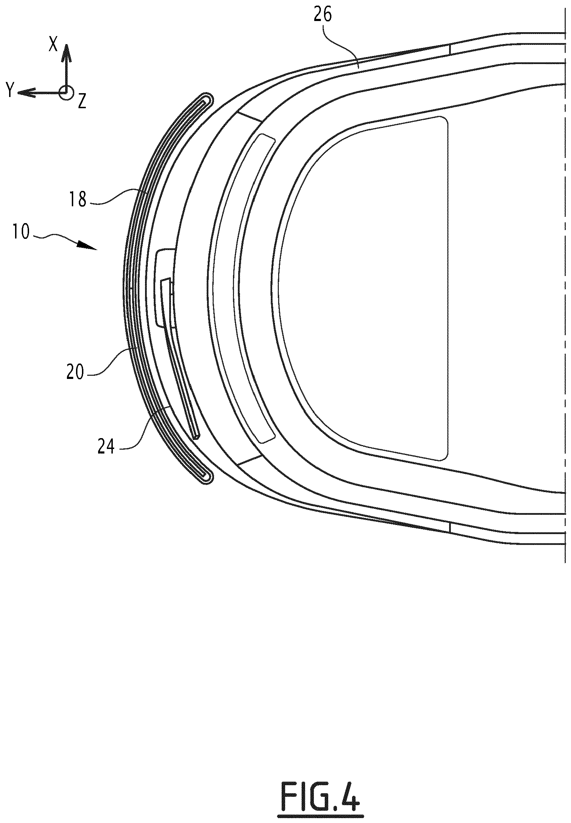

In another variant, shown on Figure 4, the device 10 is intended to be arranged along a curved surface 24, for example the front of a railway vehicle 26, so the inserts 18, 20 have a curved initial shape before inflation.

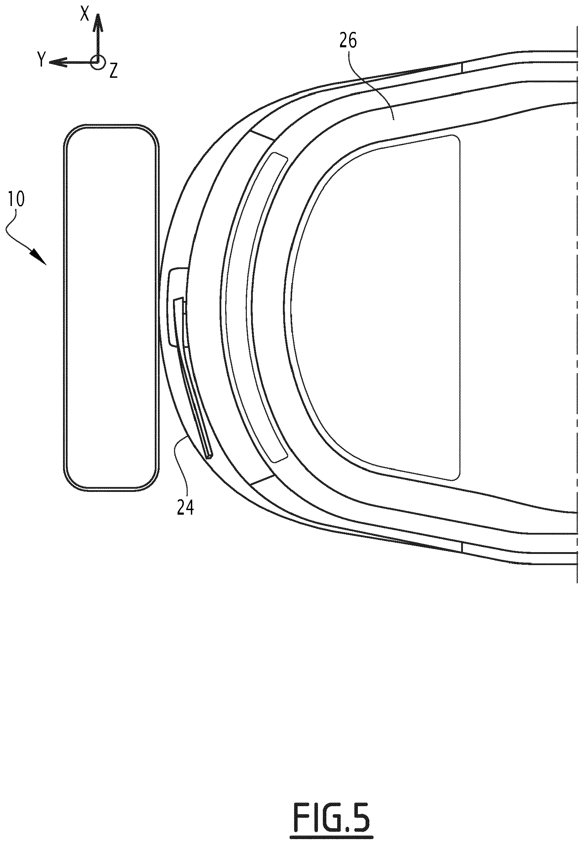

The inserts 18, 20 are then straightened when the airbag 12 is inflated, as shown on Figure 5. It should be noticed that, even when straight, the airbag device 10 stays attached to the curved surface 24, at its center.

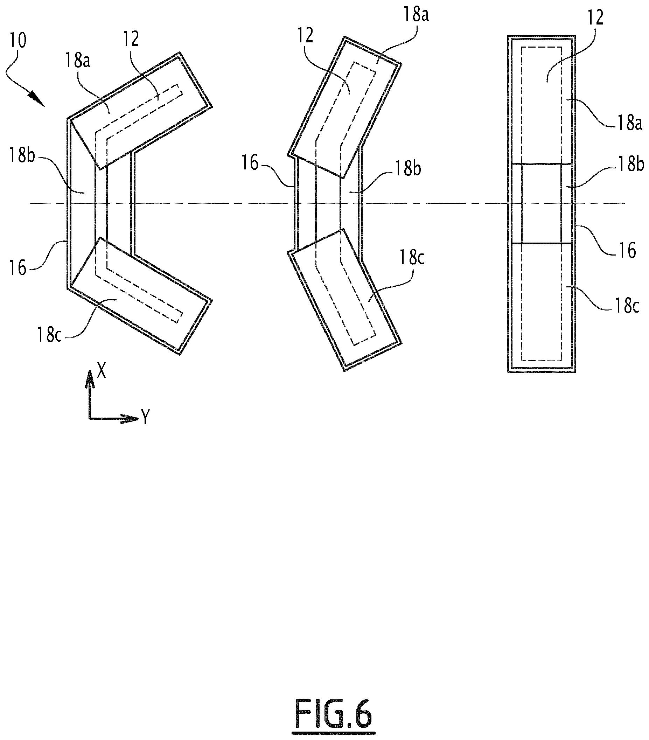

A device 10 according to a second embodiment is shown on figure 6. The overall structure of the device 10 is similar as in the first embodiment, so the device 10 of the second embodiment also comprises an airbag 12, an internal envelope 14, inserts 18, 20 and an external envelope 16.

The difference lies in the shape of the device 10 in the rest configuration, seen from above (in a plane comprising the longitudinal direction X and the transverse direction Y).

In the first embodiment, the device 10 comprises two inserts 18, 20 and so it has a linear shape along the longitudinal direction X. In the second embodiment, the device 10 comprises six inserts, more particularly three upper inserts 18a, 18b, 18c and three lower inserts (not shown but similar to the upper inserts, but under the airbag 12). In other words, the device 10 comprises three pairs of inserts, each pair comprising an upper insert and a lower insert. More particularly, the device 10 comprises a central pair (comprising the upper insert 18b), and two lateral pair (one comprising the upper insert 18a, the other comprising the upper insert 18c).

Each lateral pair is movable relative to the central pair.

The airbag 12 lies in the device 10 along all the pairs of inserts.

In the rest configuration, the lateral pairs are inclined with respect to the central pair. So, the device 10 can be arranged in a non-linear configuration when not inflated, in particular to facilitate storage in a front casing of a vehicle.

While the airbag 12 is inflated, it takes an elongated straight shape, driving the lateral pairs to align them with the central pair.

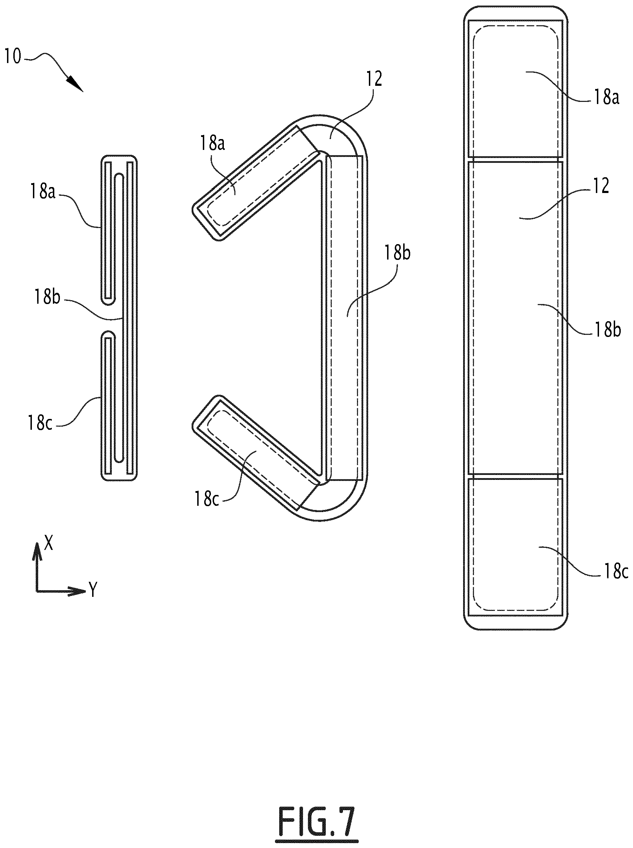

In a third embodiment, shown on figure 7, the device 10 comprises a central pair of inserts and two lateral pairs of inserts, the lateral pairs being folded over the central pair in the rest configuration, around a fold parallel to the transverse direction Y. While inflated, the device 10 spreads by having the lateral pairs unfolded.

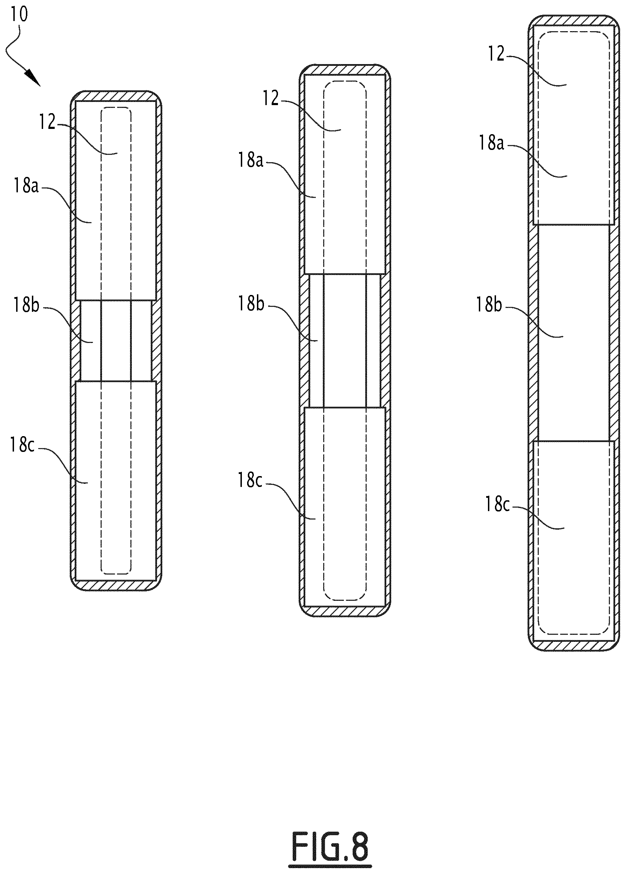

In a fourth embodiment, shown on figure 8, the device 10 comprises a central pair of inserts, and two lateral pairs of inserts, the lateral pairs overlapping the central pair in the longitudinal direction X in the rest configuration, and are spread in the longitudinal direction X in a telescopic way, by sliding and translating relative to the central pair, when the device 10 is inflated.

In another embodiment, the device 10 comprises only two pair of inserts, arranged by folds or in a telescopic manner.

In another variant, the device 10 comprises more than three pair of inserts, arranged by folds or in a telescopic manner.

These embodiments allow reducing the space requirement of the device 10 when in the rest configuration.

It should be noticed that the airbag device 10 according to the invention may be used as a frontal airbag, arranged at the front of a vehicle (as in figures 4 and 5), or as an underfloor airbag, arranged under the front of the vehicle to prevent a pedestrian to fall under the vehicle.

## Claims

1. An airbag device (10), in particular for a vehicle, comprising an external flexible envelope (16) delimiting an internal space, and a central airbag (12) arranged inside the internal space, **characterized in that** it comprises at least one flat flexible insert (18) arranged between the central airbag (12) and the external flexible envelope (16).

2. The airbag device (10) according to claim 1, comprising a flexible internal envelope (14) embedding the airbag (12).

3. The airbag device (10) according to claim 1 or 2, comprising at least one pair of inserts, each pair comprising a first upper insert (18) arranged above the airbag (12) in a vertical direction (Z) and a second lower insert (20) arranged under the airbag (12) in the vertical direction (Z).

4. The airbag device (10) according to claim 3, comprising two pair of inserts, each pair of insert being inclinable, or foldable, or extendable in a telescopic way relative to each other.

5. The airbag device (10) according to claim 3, comprising at least three pairs of inserts, comprising a central pair and at least two lateral pairs, each lateral pair being movable relative to the central pair.

6. The airbag device (10) according to claim 5, wherein the lateral pairs are movable in a plane perpendicular to a vertical direction (Z), between a rest position in which the lateral pairs are inclined with respect to the central pair, and an inflated position in which the lateral pairs are aligned with the central pair in a longitudinal direction (X).

7. The airbag device (10) according to claim 5, wherein the lateral pairs are folded over the central pair in a rest configuration, around a fold parallel to a transverse direction (Y), the lateral pairs being configured to unfold when the airbag (12) is inflated, so as to align with the central pair in a longitudinal direction (X) perpendicular to the transverse direction (Y).

8. The airbag device (10) according to claim 5, wherein the lateral pairs overlap the central pair in a longitudinal direction (X) in the rest configuration, and are spread in the longitudinal direction (X) in a telescopic way, by sliding and translating relative to the central pair, when the airbag (12) is inflated.

9. The airbag device (10) according to any of preceding claim, wherein each insert (18, 20) is made of a rigid thin plate that can deform from a substantially flat panel shape before inflation to a significantly curved panel shape after inflation.
